# EUROPEAN PATENT APPLICATION

(11) **EP 4 557 747 A1**
(43) Date of publication of application: **21.05.2025**
(21) Application number: 24212121.8
(22) Date of filing: 11.11.2024
(51) Int. Cl.: H04N 21/2385, H04N 21/6371, H04N 21/6402, H04N 21/647, H04W 72/00

(54) **MNO-PROVIDED UPLINK CHANNEL FOR BROADCASTS**

(30) Priority: 17.11.2023 US 202318513189
(71) Applicant: T-Mobile USA, Inc., Bellevue, WA 98006-1350 (US)
(72) Inventor: LEKUTAI, Gaviphat, Bellevue, 98006-1350 (US); LIU, Jun, Bellevue, 98006-1350 (US); LU, Kun, Bellevue, 98006-1350 (US)
(74) Representative: Suddaby, Mark Edward

(57) **Abstract**

Described herein are device(s) of a mobile network operator (MNO) configured to allocate one or more physical resource blocks (PRBs) for an uplink channel to receive a communication from a user equipment (UE) that is receiving a broadcast of broadcast content over a downlink channel. The communication from the UE is associated with the broadcast content or with the transmission of the broadcast content. The device(s) of the MNO then receive the communication from the UE over the uplink channel and provide information based on the communication to a broadcast provider that provided the broadcast content for broadcast over the downlink channel.

## Description

### BACKGROUND

Past uses of broadcast technologies include those of low power television (LPTV), which provides television broadcasts over ultrahigh frequencies (UHF) to, e.g., rural areas. There are constraints on such technologies, however; they are downlink only, with no uplink mechanism to provide feedback to the broadcaster.

With the advent of Fifth Generation (5G) technologies, a greater range of broadcast use cases have become available. In addition to LPTV providers, providers of satellite-based communications and vehicle-to-everything (V2X)-/unmanned aerial vehicles (UAV)-related services may broadcast content over 5G spectrum or use 5G spectrum for uplink communications accompanying broadcasts (e.g., over UHF). Either through their own networks or in partnerships with mobile network operators (MNOs), broadcast providers can achieve improved connectivity with their broadcast consumers.

### BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures indicate similar or identical items.

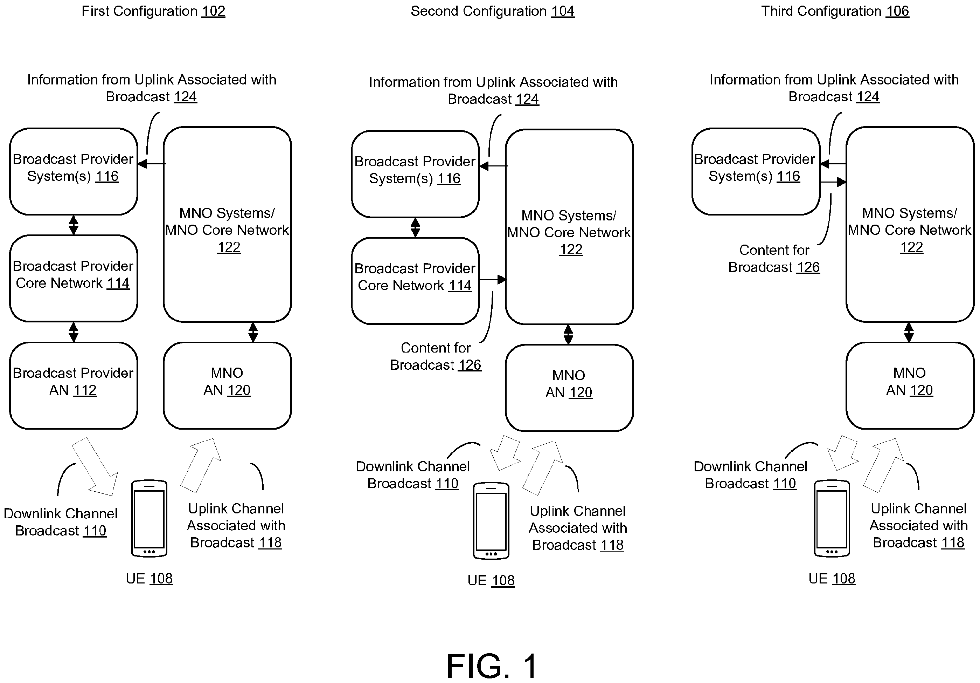

FIG. 1 is a diagram of multiple network configurations with an MNO providing an uplink channel and with a broadcast provider broadcasting content over a downlink channel, with the access network (AN) providing the downlink channel and the core network for that AN being associated with either the MNO or the broadcast provider.

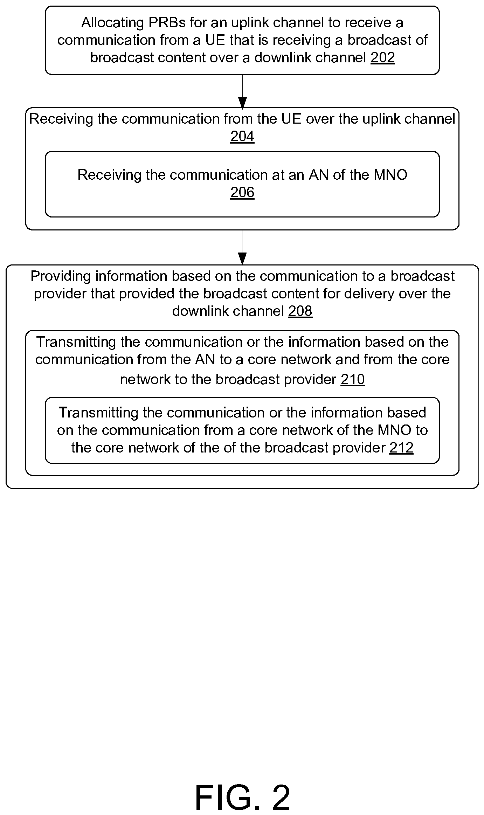

FIG. 2 is a flow diagram of an illustrative process for allocating physical resource blocks (PRBs) for an uplink channel to receive a communication from a user equipment (UE) that is receiving a broadcast of broadcast content over a downlink channel and for providing information based on the communication to a broadcast provider that provided the broadcast content for delivery over the downlink channel.

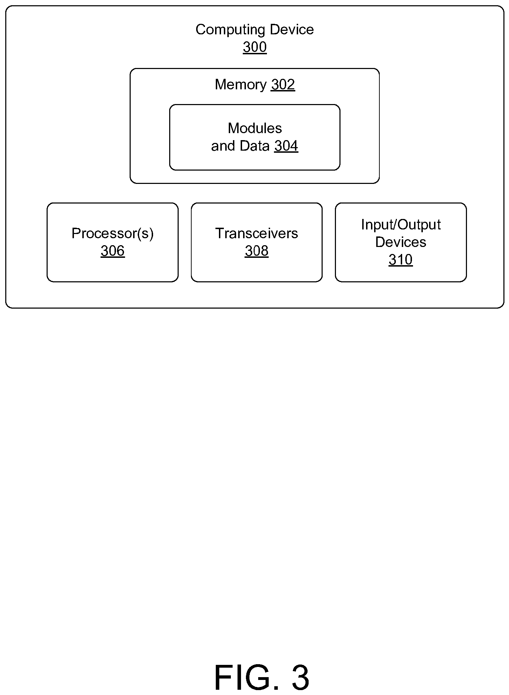

FIG. 3 is a schematic diagram of a computing device capable of implementing functionality of at least one of the device(s) of the MNO.

### DETAILED DESCRIPTION

This disclosure is directed in part to an MNO that allocates one or more PRBs for an uplink channel to receive a communication from a broadcast-recipient UE. The UE may be receiving or have received a broadcast transmission of broadcast content over a downlink channel. The communication from the UE is associated with the broadcast content or with the broadcast transmission. The device(s) of the MNO then receive the communication from the UE over the uplink channel and provide information based on the communication to a broadcast provider that provided the broadcast content.

In various implementations, a broadcast is content that is available to multiple UEs at the same time on the same spectrum. Such a broadcast may be an instance of multimedia broadcast multicast services (MBMS), enhanced multimedia broadcast multicast services (eMBMS), or multicast broadcast services (MBS). The broadcast could also or instead be achieved through non-Third Generation Partnership Project (non-3GPP) digital broadcasting systems (e.g., digital video broadcasting, SpaceX, Starlink, Amazon Kuiper, etc.). In general, the broadcast may be for LPTV, vehicle-to-everything (V2X)-/unmanned aerial vehicles (UAV)-related services, services delivered via satellite, etc. Because of the nature of a broadcast, broadcast providers do not receive feedback on the use of the broadcast, the quality of its playback or transmission, etc.

In various implementations, an MNO can address the lack of uplink for a broadcast provider by offering an uplink channel that is associated with the downlink broadcast.

FIG. 1 is a diagram of multiple network configurations with an MNO providing an uplink channel and with a broadcast provider broadcasting content over a downlink channel, with the access network (AN) providing the downlink channel and the core network for that AN being associated with either the MNO or the broadcast provider. As illustrated, FIG. 1 includes a first configuration 102, a second configuration 104, and a third configuration 106. In the first configuration 102, a UE 108 receives a broadcast over a downlink channel 110 from an AN 112 of a broadcast provider. The AN 112 is in turn connected to a core network 114 of the broadcast provider, which may be connected to one or more broadcast provider system(s) 116. The UE 108 may also send communications over an uplink channel 118 associated with broadcasts. The uplink channel 118 may be provided by an AN 120 of a MNO. The AN 120 of the MNO may in turn be connected to a core network 122 of the MNO, including optionally one or more other MNO systems. The core network/systems 122 of the MNO may provide information 124 associated with the communications received over the uplink channel 118 to the broadcast provider system(s) 116.

As further illustrated, in second configuration 104, the broadcast provider may utilize the AN 120 of the MNO for the downlink channel 110 for broadcast transmissions. The broadcast provider may still utilize its own core network 114, which may provide the broadcast content 126 to the core network 122 of the MNO for downlink transmission from the AN 120. In the third configuration 106, the broadcast provider may not use its own (or have its own) AN 112 and core network 114. Rather, the broadcast provider system(s) 116 may provide the broadcast content 126 to the core network/system(s) 122 of the MNO for downlink transmission over a downlink channel 110 of the MNO.

In various implementations, the UE 108 may be any sort of computing device capable of wirelessly connecting to an access point, such as those providing AN 112 and AN 120, and of mobility and use in different locations. Examples of UE 108 include cellular phones, tablet computers, Internet-of-Things (IoT) devices, laptop computers, in-home connected appliances, connected vehicles, etc. The computing device illustrated in FIG. 3 may be an example of UE 108; it is described in greater detail further herein.

As shown in FIG. 1, the UE 108 is capable of connecting to one AN or multiple ANs at a same time, and of communicating over downlink channel 110 and uplink channel 118 over the same AN 120 or over multiple ANs 112 and 120. The UE 108 may include an application associated with the broadcast provider or an application configured to play the type of content received from the broadcast provider. The application may further be configured to establish a communication session over the uplink channel 118 to provide feedback related to the playback or transmission of the broadcast over the downlink channel 110. Alternatively, the application may not be configured to establish a communication session over the uplink channel 118, but other components of the UE 108 may do so. In either case, the UE 108 may connect to a band/carrier/PRBs whose identification is specified by the UEs configuration, received from the AN 120, or obtained from the broadcast over the downlink channel 110.

Examples of the information that can be included in communications sent over the uplink channel 118 include at least one of feedback from a viewer/user of the UE 108, feedback from the UE 108, data related to a threshold to start service or stop service, information related to a service change, information related to degrading a service or upgrading a service, a customization for streaming of the broadcast content, or a customization for a television (TV)-in-TV viewer. Such data may be gathered by the UE 108 or received from another device and provided over the uplink channel 118 to provide feedback to the broadcast provider.

In some implementations, the AN 112 may be a local network provided by any sort of access point. Such an access point may be a base station, a wireless router, etc. As shown in FIG. 1, the AN 112 is associated with the broadcast provider and may be infrastructure purchased or leased by the broadcast provider. In some implementation, all spectrum of the AN 112 or a subset of such spectrum may be used for downlink broadcast(s) and may comprise at least the downlink channel 110. In some implementations, the spectrum used by AN 112 for broadcast transmissions may be different from the spectrum used by AN 120 for transmitting or receiving. For example, LPTV may be transmitted over different spectrum on AN 112 than the spectrum used for Third Generation (3G), Fourth Generation (4G), and/or Fifth Generation (5G) communications by AN 120. Further, broadcast transmissions are one-to-many; that is, they are from one AN 112 to any number of UEs that have configured their radio equipment to receive the broadcast content over the downlink channel 110 on the frequency of the downlink channel 110. As noted herein, the AN 112 may not have an uplink channel. In the first network configuration 102, the downlink channel 110 is provided by the AN 112.

AN 120 may also be a local network provided by any sort of access point, such as a base station, a wireless router, etc. It may be of any wireless network technology, such as UHF, WiFi, 5G, 4G, 3G, and earlier and later generation network technologies. Also, the AN 120 may be associated with the MNO. The AN 120 provides the uplink channel 118 and may, in some network configurations (e.g., the second configuration 104 and third configuration 106) provide the downlink channel 110. When providing the downlink channel 110, the AN 120 may receive the broadcast content from its MNO core network 122 (also referred to herein as core network 122). Also, when providing the downlink channel 110, the AN 120 allocates PRBs for the downlink channel 110 and broadcasts the broadcast content to the frequencies corresponding to those PRBs. Such frequencies may be those used, for example, by UHF. Likewise, the AN 120 may allocate PRBs to the uplink channel 118 and may, e.g., receive communications from UE 108 at the frequencies corresponding to those PRBs. The AN 120 may require that the UE 108 be registered or may be configured to simply receive communications at the frequencies corresponding to the PRBs. In some implementations, the MNO may configure the UE 108, through the AN 120, with information identifying the uplink channel 118 or causing the UE 108, when receiving a broadcast, to register with the AN 120, which may then respond with an identification of the uplink channel 118. As noted herein, in one implementation the UE 108 may receive an identification of the AN 120 or the uplink channel 118 in the broadcast content or in control signaling accompanying that content.

In various implementations, the AN 120 may add information related to performance of the uplink channel 118 gathered by the AN 120 to the information included in the communication from the UE 108 over the uplink channel 118. When the AN 120 also provides the downlink channel 110, the AN 120 may add information related to performance of the downlink channel 110 gathered by the AN 120 to the information included in the communication from the UE 108 over the uplink channel 118. Any or all of this information may be included in the information 124 with information gather by the UE 108 associated with the broadcast transmission over the downlink channel 110. As shown in FIG. 1, the information 124 may be provided by the core network 122 to the broadcast provider system(s) 116.

In further implementations, such as those represented in the first network configuration 102 and the second network configuration 104, the broadcast provider may have its own core network 114 that can provide, at 126, the broadcast content for transmission through the core network 122 of the MNO and the AN 120 of the MNO. In turn, it can receive information 124 through the MNO core network 122. In some implementations, the core network 114 may include core network nodes such as a user plane function (UPF) or session management function (SMF).

The broadcast provider may also include one or more systems 116, such as application servers or other servers of the broadcast provider. These systems 116 may provide the broadcast content to the core network 114 for further transmission and receive the information 124 from the MNO core network 122. Optionally or additionally, these systems 116 may be part of the core network 114.

In each of the network configurations 102, 104, and 106, the AN 120 may be connected to an MNO core network 122. In the second configuration 104 and third configuration 106, the core network 122 may receive, at 126, the broadcast content from the core network 114 or broadcast provider system(s) 116 and provide, information 124 to the core network 114 or broadcast provider system(s) 116. When receiving, at 126, the broadcast content, the core network 122 may provide the broadcast content to AN 120 for broadcast transmission over the air. The core network 122 may also receive the information 124 from the AN 120 and may add to the information further data associated with the UE 108, the AN 120, or the location/area where the UE 108 is.

In further implementations, the broadcast provider and MNO may share each other's spectrum/frequencies, with broadcast content transmitted over, e.g., UHF, 3G, 4G, 5G, etc. and MNO traffic sent and received over UHF, 3G, 4G, 5G, etc. Further, either or both of the MNO or the broadcast provider could make use of unlicensed frequencies.

FIG. 2 illustrates an example process. This process is illustrated as a logical flow graph, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 2 is a flow diagram of an illustrative process for allocating physical resource blocks (PRBs) for an uplink channel to receive a communication from a user equipment (UE) that is receiving a broadcast of broadcast content over a downlink channel and for providing information based on the communication to a broadcast provider that provided the broadcast content for delivery over the downlink channel.

As illustrated at 202, device(s) of an MNO allocate one or more PRBs for an uplink channel to receive a communication from a UE that is receiving a broadcast of broadcast content over a downlink channel. The communication from the UE is associated with the broadcast content or with the transmission of the broadcast content. In various implementations, a broadcast provider of the broadcast content is a provider of LPTV, a satellite broadcaster, or a broadcaster for V2X-/ UAV-related services.

At 204, the device(s) of an MNO receive the communication from the UE over the uplink channel.

At 206, the receiving may comprise receiving the communication at an AN of the MNO. In various implementations, the communication from the UE may include feedback from the viewer or from the UE for the broadcast provider. Also or instead, the communication from the UE may include at least one of a data related to a threshold to start service or stop service, information related to a service change, information related to degrading a service or upgrading a service, a customization for stream of the broadcast content, or a customization for a television (TV)-in-TV viewer.

At 208, the device(s) of an MNO provide information based on the communication to a broadcast provider that provided the broadcast content for delivery over the downlink channel.

At 210, the providing may comprise transmitting the communication or the information based on the communication from the AN to a core network and from the core network to the broadcast provider.

At 212, the transmitting to the core network may comprise transmitting the communication or the information based on the communication from a core network of the MNO to the core network of the of the broadcast provider. In such implementations, the downlink channel may be associated with an AN of the broadcast provider and the AN of the broadcast provider with a core network of the broadcast provider. Further, information based on the communication may include one or more data items from the communication, information related to performance of the uplink channel gathered by the AN of the MNO, or both.

In further implementations, both the uplink channel and the downlink channel may be associated with the AN of the MNO, and the information based on the communication may include one or more data items from the communication, information related to performance of the uplink channel gathered by the AN of the MNO, information related to performance of the downlink channel gathered by the AN of the MNO, or multiple ones of these.

FIG. 3 is a schematic diagram of a computing device capable of implementing functionality of at least one of the device(s) of the MNO. As shown, the computing device 300 includes a memory 302 storing modules and data 304, processor(s) 306, transceivers 308, and input/output devices 310.

In various examples, the memory 302 can include system memory, which may be volatile (such as RAM), non-volatile (such as ROM, flash memory, etc.) or some combination of the two. The memory 302 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store the desired information.

The memory 302 can include one or more software or firmware elements, such as computer-readable instructions that are executable by the one or more processors 306. For example, the memory 302 can store computer-executable instructions associated with modules and data 304. The modules and data 304 can include a platform, operating system, and applications, and data utilized by the platform, operating system, and applications. Further, the modules and data 304 can implement any of the functionality for the UE 108, the AN 112, the AN 120, node(s) of core network 114, node(s) of core network 122, or broadcast provider system(s) 116, any other node/device described and illustrated herein.

In various examples, the processor(s) 306 can be a central processing unit (CPU), a graphics processing unit (GPU), or both CPU and GPU, or any other type of processing unit. Each of the one or more processor(s) 306 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 406 may also be responsible for executing all computer applications stored in the memory 302, which can be associated with types of volatile (RAM) and/or nonvolatile (ROM) memory.

The transceivers 308 can include modems, interfaces, antennas, Ethernet ports, cable interface components, and/or other components that perform or assist in exchanging wireless communications, wired communications, or both.

While the computing device need not include input/output devices 310, in some implementations it may include one, some, or all of these. For example, the input/output devices 310 can include a display, such as a liquid crystal display or any other type of display. For example, the display may be a touch-sensitive display screen and can thus also act as an input device or keypad, such as for providing a soft-key keyboard, navigation buttons, or any other type of input. The input/output devices 310 can include any sort of output devices known in the art, such as a display, speakers, a vibrating mechanism, and/or a tactile feedback mechanism. Output devices can also include ports for one or more peripheral devices, such as headphones, peripheral speakers, and/or a peripheral display. The input/output devices 310 can include any sort of input devices known in the art. For example, input devices can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

Although features and/or methodological acts are described above, it is to be understood that the appended claims are not necessarily limited to those features or acts. Rather, the features and acts described above are disclosed as example forms of implementing the claims.

## Claims

1. A method implemented by device(s) of a mobile network operator, MNO, the method comprising:
allocating one or more physical resource blocks, PRBs, for an uplink channel to receive a communication from a user equipment, UE, that is receiving a broadcast of broadcast content over a downlink channel, wherein the communication from the UE is associated with the broadcast content or with a transmission of the broadcast content;
receiving the communication from the UE over the uplink channel; and
providing information based on the communication to a broadcast provider that provided the broadcast content for delivery over the downlink channel.

2. The method of claim 1, wherein the receiving comprises receiving the communication at an access network, AN, of the MNO and the providing comprises transmitting the communication or the information based on the communication from the AN to a core network and from the core network to the broadcast provider.

3. The method of claim 2, wherein the downlink channel is associated with an AN of the broadcast provider and the AN of the broadcast provider with a core network of the broadcast provider, and the transmitting to the core network comprises transmitting the communication or the information based on the communication from a core network of the MNO to the core network of the broadcast provider; and
wherein the information based on the communication includes one or more data items from the communication, information related to performance of the uplink channel gathered by the AN of the MNO, or both.

4. The method of claim 2, wherein both the uplink channel and the downlink channel are associated with the AN of the MNO, and the information based on the communication includes one or more data items from the communication, information related to performance of the uplink channel gathered by the AN of the MNO, information related to performance of the downlink channel gathered by the AN of the MNO, or multiple ones of these.

5. The method of claim 1, wherein the communication from the UE includes feedback from a viewer or from the UE for the broadcast provider.

6. The method of claim 1, wherein the communication from the UE includes at least one of a data related to a threshold to start service or stop service, information related to a service change, information related to degrading a service or upgrading a service, a customization for stream of the broadcast content, or a customization for a television, TV,-in-TV viewer.

7. The method of claim 1, wherein the broadcast provider is a provider of low-power television, a satellite broadcaster, or a broadcaster for vehicle-to-everything, V2X,-/unmanned aerial vehicles, UAV,-related services.

8. One or more devices of a mobile network operator, MNO, comprising:
one or more processors; and
a plurality of programming instructions that, when executed by the one or more processors, cause the MNO to perform operations including:
allocating one or more physical resource blocks, PRBs, for an uplink channel to receive a communication from a user equipment, UE, that is receiving a broadcast of broadcast content over a downlink channel, wherein the communication from the UE is associated with the broadcast content or with a transmission of the broadcast content;
receiving the communication from the UE over the uplink channel; and
providing information based on the communication to a broadcast provider that provided the broadcast content for delivery over the downlink channel.

9. The one or more devices of claim 8, wherein the uplink channel is associated with an access network, AN, of the MNO and the AN of the MNO with a core network of the MNO, and
wherein the downlink channel is associated with an AN of the broadcast provider and the AN of the broadcast provider with a core network of the broadcast provider.

10. The one or more devices of claim 8, wherein both the uplink channel and the downlink channel are associated with an access network, AN, of the MNO, but the MNO is connected to a core network of the broadcast provider for a communication of the broadcast content over the downlink channel.

11. The one or more devices of claim 8, wherein both the uplink channel and the downlink channel are associated with an access network, AN, of the MNO, and the AN of the MNO with a core network of the MNO, and
wherein the broadcast provider provides the broadcast content through the core network and the AN of the MNO.

12. The one or more devices of claim 8, wherein the information based on the communication includes one or more data items from the communication, information related to performance of the uplink channel gathered by an access network, AN, of the MNO, information related to performance of the downlink channel gathered by the AN of the MNO, or multiple ones of these.

13. The one or more devices of claim 8, wherein the communication from the UE includes at least one of a data related to a threshold to start service or stop service, information related to a service change, information related to degrading a service or upgrading a service, a customization for stream of the broadcast content, or a customization for a television, TV,-in-TV viewer.

14. The one or more devices of claim 8, wherein the broadcast provider is a provider of low-power television, a satellite broadcaster, or a broadcaster for vehicle-to-everything, V2X,-/unmanned aerial vehicles, UAV,-related services.

15. A computer storage medium having programming instructions stored thereon that, when executed by a processor associated with a mobile network operator, MNO, cause the processor to perform the method of any one of claims 1 to 7.
